# EUROPEAN PATENT SPECIFICATION

(11) **EP 1 447 954 B1**
(45) Date of publication and mention of the grant of the patent: **22.03.2006**
(21) Application number: 03360012.3
(22) Date of filing: 31.01.2003
(51) Int. Cl.: H04L 29/06

(54) **A method, a locator agent unit, a distributed locator system and a computer software product for coordinating location dependent information, services, and tasks**
Verfahren, Ortungsagent, verteiltes Ortungssytem und Computer Software Produkt zur Koordinierung von positionsabhängigen Informationen, Diensten und Aufgaben
Procédé, agent localisateur, système distribué de localisation et logiciel pour la coordination d'informations, de services et de tâches dépendants de la position

(43) Date of publication of application: 18.08.2004
(73) Proprietor: ALCATEL, 75008 Paris (FR)
(72) Inventor: Rössler, Horst, 70794 Filderstadt (DE); Hoche, Michael Walter, Dr., 71701 Schwieberdingen (DE)
(74) Representative: Brose, Gerhard

(56) References cited:
- WO-A-02/17567
- WO-A-02/058426
- US-A- 6 049 819
- US-A1- 2001 036 224
- US-A1- 2001 044 309
- US-A1- 2002 042 278
- US-A1- 2002 057 283

## Description

The present invention relates to telecommunication with location and proximity awareness. More particularly, the present invention relates to a method, a distributed locator system, a locator agent unit, a locator device, a locator client, and a computer software product.

A telecommunication with location and proximity awareness is known from e.g. the international patent application WO 98/54682, describing the generation and delivery of travel-related, location-sensitive information.

Mobility in the wireless world comes with a paradox. On the one hand, the mobile user is location-neutral and able to access services from any location. On the other, mobile networks are location-aware, by necessity, in order to route message to and from users who are moving around within the service area covered by the network.

Mobile devices liberated people to communicate on a person-to-person basis, instead of calling from one place to another place. The Internet today is still restricted by the same factor that communication used to be location dependent. We believe that people will welcome the possibility to access the services and information that they need at any given time or place and to access location-relevant content from a mobile device.

The value of information seems to be a function of three elements: personal relevance, location, and time. Information about the closest place to get local currency, for example, can be very important when you are traveling, but of no value to you when you are back at home. A method for combining time and place gives another dimension to the value of information.

Such a method is known from the International Patent Application No. WO 02/17567 A2. There a system is disclosed enabling the dissemination of location information between user terminals and to and from network resources and the utilization of the location information in a manner convenient to users.

Similarly the US Patent Application Publication No. US 2001/0036224 A1 discloses a system and method for the delivery of targeted data over wireless networks. And the US Patent Application Publication No. US 2002/0042278 A1 discloses an intelligent remote location system. A region modeling for location services could be found in the US Patent Application Publication No. US 2002/0057283 A1. The international Patent Application Publication No. WO 02/058426 A1 describes another system for facilitating the delivery of location information. And the US Patent No. 6,049,819 provides a communication system incorporating an agent oriented computing environment.

High-speed information and communication services becoming available through network enhancements like General Packet Radio Services (GPRS) and third-generation Universal Mobile Telecommunications System (UMTS) should enable rapid development of a diverse range of advanced location-based services.

Along with the potential for location-aware services to add value comes a new kind of privacy concern. The network operator knows a subscriber's location, and operators must use this information to enable services according to the subscriber's wishes. An often-cited example of location-based services goes something like this: You are walking post a coffee shop and you get a coupon message on your mobile phone inviting you to come in and have a cup of coffee at a reduced price. This type of service may be attractive to some, but for others it might have overtones of "Big Brother's watching you!"

Control over location-based services must be firmly and unambiguously placed in the user's hands.

Dealing with all available information is using the context of an application to adopt the information presented. One context for mobile systems is location.

US Patent No. 6,327,535 describing a context aware computing system and method, where hierarchical structures are used implementing context information (location).

The term context awareness has been used in a wide range of concepts and applications for different types of information technology artifacts. For instance even help functions in our office applications claim to be context aware when they try to figure out what we are having problems with when turning to the help function. The navigation help in cars that knows where the car is located is also called context aware.

Obviously context can be used to describe a wide area of characteristics, ranging from defining the context as knowing what a user is doing, what other applications in the same computer are doing, or knowing where a user is located.

The context of an application or an artifact can be divided into physical environment, assumptions or models, and human factors. The human factors include the state of the user, what task he or she is performing as well as his or her condition. The physical environment is at a lower abstraction level and consists of physical variables, e.g. position or other physical conditions. The model assumptions reflects the fact how location information is interpreted. For instance in the context of a museum visitor might be rather stating relative location information than to present absolute terrestrial location information in Universal Transverse Mercator (UTM) coordinates. Using models is about setting a frame of reference.

There are two basic types of techniques to gain location awareness, namely relative or absolute positioning (with respect to a reference).

There are a number of different technologies for absolute positioning, e.g. the Global Positioning System (GPS) or Global System for Mobile communication (GSM) cell information together with the Mobile Positioning System (MPS).

Relative location aware systems are, in contrast to absolute location awareness, aware of what other objects that are in their proximity. The objects can be moved around and when using relative location awareness a system could recognize other objects without pending on where the device is located.

If a system uses absolute positioning and is able to communicate with a network it is possible to simulate relative location awareness. Relative positions can be sheaved into absolute as soon as one relative object is anchored within a context.

A locator service application focus spatial collaboration: A large part of life is collective, involving discussions and joint explorations. Life is very much about exploring how to frame the events taking place. In a sense, it is not about finding answers to questions, but rather to frame the problem and give the correct background. Activities are very time dependent. Many activities even cannot be done more than once. It is advantageous to facilitate contacts between collaborating parties that could contribute to each other's task when they are within a context close to each other, e.g. geographically, in a time frame, or a shared concern.

For this type of application it is advantageous using agent technology. An (information) agent is an (computational software) entity that may access one or multiple, distributed, and heterogeneous information sources available, and pro-actively acquires, mediates, and maintains relevant information on behalf of its user(s) or other agents preferably just-in-time. In other words, information agents are supposed to cope with the difficulties associated with the information overload of the user. This implies their ability to semantically broker information by providing a pro-active resource discovery; resolving the information impedance of information consumers and providers; offering value-added information services and products to the user or other agents.

Intelligent information agents may be classified according to one or more of the following features: Non-cooperative or cooperative information agents, depending on the ability if the agents cooperate with each other for the execution of their tasks. Adaptive information agents are able to adapt themselves to changes in networks and information environments. Rational information agents behave utilitarian in an economic sense. They are acting, and may even collaborate together, to increase their own benefits. Mobile information agents are able to travel autonomously through the Internet. Such agents enable, dynamic load balancing in large-scale networks, reduction of data transfer among information servers, and migration of small business logic within medium-range corporate intranets on demand.

Regarding the basic skills of information agents one differentiates between communication, knowledge, and collaboration.

Communication skills of an information agent include either communication with information systems and detectors, human users, or other agents. In the latter case, the use of a commonly agreed agent communication language (ACL) such as FIPA ACL and KQML has to be considered on top of, for example, middleware platforms or specific application interfaces.

Technologically an agent is a computer system that is situated in some environment, and that is capable of autonomous action in this environment in order to meet its design objectives.

To reach context awareness one first have to identify the context. In the case of location and proximity awareness the context is the position - either relatively or absolute - of a (telecommunication) device or an associated person.

The following devices have to be distinguished: a located device, a to be located device or user, and a locating device or detecting devices which is called locator device. These devices might coincide meaning they might be integrated.

A to be located device is the device that has to be classified by its position. The detector devices have to measure or observe this location information. There are two location information classes, absolute and relative ones. Correspondingly there are multiple types of detectors providing e.g. proximity measurements, direction measurements, position measurements etc.

Starting from ad hoc solutions transforming certain coordinates or positions into a series of activities on a trajectory are well known, e.g. from a navigation system optimizing a route with respect to tasks. Sensor data fusion, i.e. technologies to extract based on sensor images object information using pattern matching, tracking, etc. are also well known.

In view of the system and method known from International Patent Application No. WO02/17567A2, an efficient and secure personalized uniform application interface for personal location information has to be provided.

This problem is solved by a method for coordinating location dependent information, services, or tasks, comprising the steps of deriving and refining location information of at least one user based on location measurements or proximity observations, providing actual location information of said at least one user or planned location information of said at least one user, initiating tasks, providing information, or services dependent on tracking information or planned location information, such that said location information is provided by a locator entity in a distributed system gathering said location measurements or proximity observations and aggregating said actual or said planed location information of said of at least one user and in that said locator entity is restricting the accesses to said location information by further comprising the steps of authenticating and authorizing or trusting inquirer parties, and serving location information requests (RI) according to inquirer's grants. Said location information might be encrypted for ensuring privacy. And said authenticating and authorizing or trusting might be realized applying cryptography techniques. Said grants might be specified depent on the relative location or absolute location of a inquirer or a user, an inquirer's identity, an inquirer's intention, a users intention, time, or an information exchange contract. And said provided location information might further comprise tracking information. Said location information might be a fusion of multiple location measurements or multiple proximity observations improving the location precision and reliability. The method might further comprise the step of pro active involving a user or an other party dependent on location, time, or contextual user preferences, or might further comprise the step of specifying the behavior of the locator entity or inquirer's grants by an authenticated and authorized party.

The problem is further solved by a Locator Agent Unit for coordinating location dependent information, services, or tasks comprising locating means for receiving and/or deriving location information and providing actual location information or planned location information, and means for initiating tasks or services dependent on the derived location information and planned location information, and comprising a uniform networking interface for detecting devices feeding location information, enabling communication with inquirers' and other parties' clients, and allowing controlling the locator agent unit, and investigation means for identifying and coordinating location information sources or inquirers' and other parties' clients. The Locator Agent Unit might comprise a map unit for collecting location information from said sources, aggregating said location information onto a virtual map, and organization means for coordinating location dependent information, services, or tasks dependent on said aggregated location. And the Locator Agent Unit might further comprise means for authenticating and authorizing client devices or inquirers. Further it might comprise means for location information encryption and decryption for ensuring privacy. It might be realized by a network service, e.g. an Internet service using (mobile or intelligent) agent technology.

The problem is also solved by a Locator Device for coordinating location dependent information, services, and tasks, providing location measurements and proximity observations of a user, providing a network interface to a locator agent unit.

And the problem is solved by a Locator Client Device for exchanging location dependent information or coordinating location dependent services or tasks by comprising communication means for communicating requests and location dependent information, comprising a network interface to a locator agent unit.

In a whole the problem is solved by a Distributed Locator System for providing coordinated location information dependent information, services, or tasks, comprising a network and locator agent units providing a uniform location information interface. The distributed locator system might further comprise telecommunication network with locator devices, and locator client devices. The telecommunication network might comprise an Internet and/or a mobile telecommunication network. The distributed locator system might also comprise an agent software and hardware platform. The distribution and allocation of a locator agent unit in the distributed system is preferably aligned with the location information of said locator agent unit.

And the problem is solved by a Computer Software Product for coordinating location dependent information, services, and tasks comprising computer program means for performing the method according to claim 1.

In other words the invention is a system which seeks (locates) people or people's devices and provides useful information for those who seek them. The system comprises means for providing limited and restricted location information of people who want to be found. The system is preferred being an agent providing and managing location information.

The invention might be realized by a personalized intelligent (software) agent having a uniform application interface providing location information. This agent is called in the following personalized locator agent unit.

This personalized locator agent unit might be a proactive agent supporting several kinds of contextual awareness, e.g. proximity awareness of other user's, location-task awareness, or location-time awareness.

A system able to find people at any time, anywhere is a powerful tool, preferably having control mechanisms and configuration possibilities according to users demands and it should keep privacy, e.g. avoiding undesired people tracking you, no disturbance at specific locations or no disturbance during a specific period of date/time, e.g. business hours.

The personalized locator agent unit generates a synthesis of location information. Such a synthesis or aggregation might be a combination of multiple measurements in order to concentrate the occurrence probability. It records and analyzes the users tracking path, e.g. GPS location data and time over a period of time.

A proactive agent preferably provides a user with the opportunity to attach access control configurations to individual locations (analyzed) depending on the identified persons preferences. Moreover the proactive agent might offer the attachment of arbitrary information, e.g. a uniform resource identificator with something about the location, which will be automatically offered to the person who found the user.

When a user reaches an individual location, the attached access configuration is automatically activated and might restrict other people to find this user.

The identification and authorization of an inquirer as well as the provided information might require certain cryptology techniques, e.g. public keys and electronic certificates or signatures.

The suggested solution provides means to gather, aggregate, and deploy (personal) location information in a networking environment. It enabled deploying location aware and location dependent services using a generic personalized and private application interface for personal location information and personal interaction management.

Accordingly, it is an object and advantage of the present invention realizing location aware devices and services in a simple way with an enhanced and simplified design and deployment of location awareness by delegation of functionality into location agent units.

Another advantage of the present invention is enabling private and secure interoperation of location aware services.

These and many other objects and advantages of the present invention will become apparent to those of ordinary skill in the art from a consideration of the drawings and ensuing description.
**Figure. 1** is a schematic drawing of a location model used by a locator agent unit according to the invention.
**Figure. 2** is a schematic drawing of a locator agent unit according to the invention.
**Figure. 3** is a schematic drawing of a of a locator agent unit and its networking interfaces to locator devices and locator client devices according to the invention.
**Figure. 4** is a schematic drawing of a scenario illustrating the functionality of a distributed locator system according to the invention.
**Figure. 5** is a schematic drawing of distributed locator agent units within a distributed locator system according to the invention.

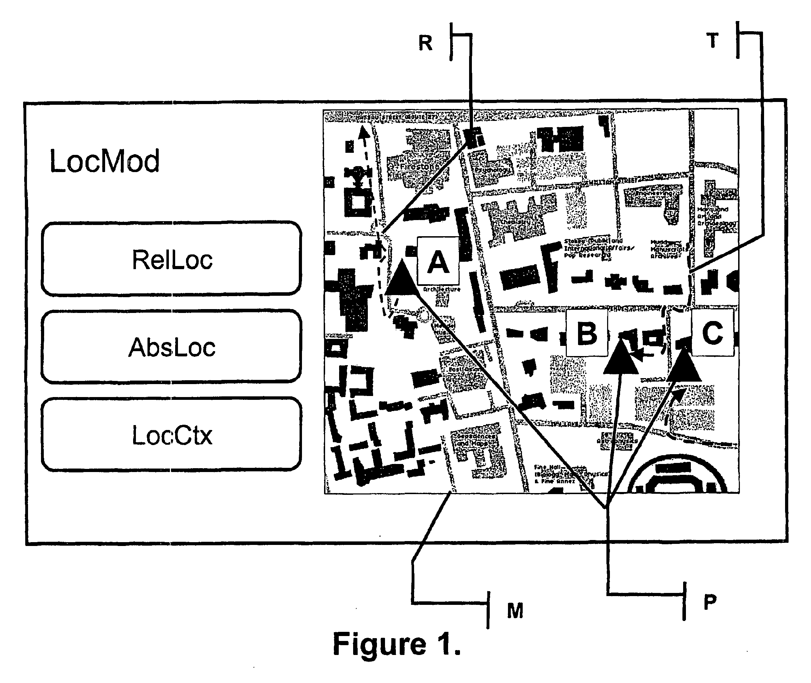

Figure. 1 shows a location model LocMod used by a locator agent unit according to the invention. The location model comprises of relative location information RelLoc, absolute location information AbsLoc with respect to a coordinate system or a map M, and a location context LogCtx, e.g. a running task like shopping or a location environment like a museum or a campus. Even time is considered as a location context.

The map might comprise of location context information like buildings or streets, or plans etc. The location model contains three entities, e.g. persons A, B and C. The positions P of the persons A, B and C are represented by black triangles. There are also dashed arrows for routes R and traces T. A trace is a list of already visited points and a route is a list of expected to be visited points. (Point means here time location combinations.) The arrows indicate the direction of movement.

There is an obvious distance between two objects (represented in a location model), e.g. the Euclidean metric.

Suppose for a moment that the map is oriented, i.e. north is upside and south is correspondingly downside. The location model shows that person A, located at the left hand side will move north. There is no route information for the other two persons, but trace information. Person B came from north while person C came from south.

The location model provides a way of concluding about location information, what location information is intended for, and how it is interpreted. It provides a context for interpretation.

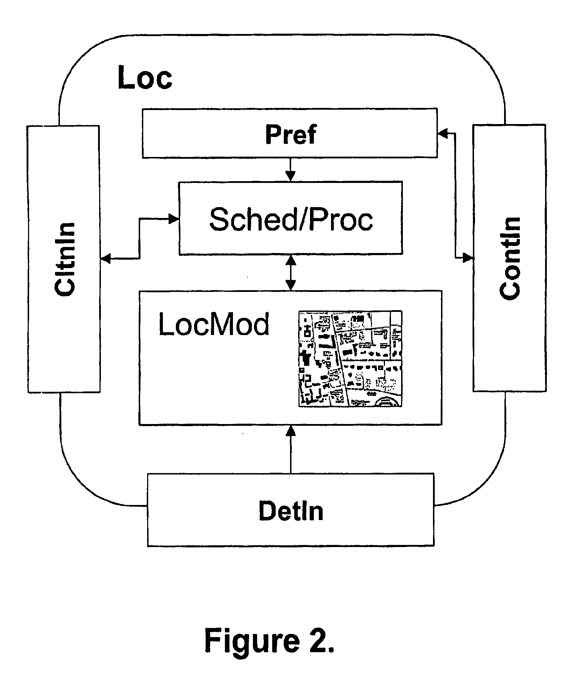

Figure. 2 shows a schematic drawing of a locator agent unit Loc. The locator agent unit comprises a location model LocMod, a processor unit with a scheduler Sched/Proc , user preferences Pref, and three uniform networking interfaces, a control interface Contln, a client interface Cltnln, and a detector interface Detln.

The networking interfaces Contln, Cltnln, and Detln enable the locator agent unit to interact with other components in a distributed system. The interfaces might be realized by an integrated common interface. It is here decomposed into three interfaces to illustrate interactions and functionality.

The control interface Contln enables a user to configure the locator agent unit's behavior, e.g. by defining preferences Pref. The detector interface Detln enables the locator agent unit to gather location measurements and/or observations about where the represented person (device) is located. The client interface Clntln enables locator clients and locator agent units to exchange requests, queries, and especially locator information.

The locator agent unit Loc comprises a realization of a location model LocMod carrying the information about location context and location of observed objects. Such object might present the user itself as well as other collaborating entities like persons, devices, or places, e.g. rooms or buildings. These objects might be placed in a space or a map spanned by a coordinate system.

To enable the locator agent unit to interact with the distributed locator system a processor unit Proc is coordinated by a scheduler Sched based on the location information retrieved out of the location model LocMod performing certain interactions with locator clients, e.g. like providing a proximity alert or providing certain tasks when the user is at certain times at certain locations. The processor unit Proc is the unit providing location information to privileged users, i.e. users with granted access. It might act proactive according to the defined preferences Pref. This is the unit responsible for verifying an inquirer's identity and authorization to request certain location information. For an authenticated inquirer's request with approved grants to get certain location information, according to the defined preferences Pref, the processor should serve the requests accordingly and optionally cryptographically secured to ensure real privacy.

The preferences Pref modifiable via the control interface Contln comprising location information access grants and restrictions. These grants might be based on contracts e.g. between other locator agent units or directives from the locator agent unit user. It might further comprise resolutions for unauthorized location information request and exception scenarios, e.g. when the location models LocMod between parties need to be aligned. The user's preferences might be time dependent as well as location dependent or in general context dependent. Preferences here is intended to mean behavioral description and might even comprise entries such as control commands, task lists, or contracting instructions.

The locator agent unit Loc provides a kind of locator service through the client interface Cltnln. This networking interface enables a locator client finding a person, i.e. retrieving certain location information or providing certain location information.

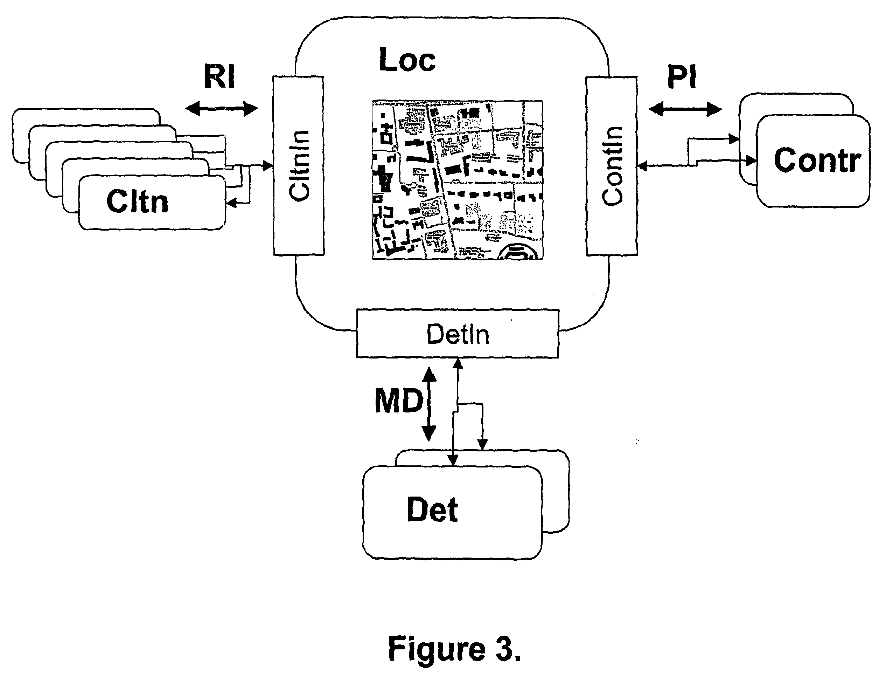

Figure. 3 shows a schematic drawing of a of a locator agent unit Loc and its networking interfaces Contln, Cltnln, and Detln to locator devices or detectors Det, locator client devices Cltn, and to control devices Contr.

The locator devices Det interact with the locator agent unit Loc via a detector interface Detln. The locator devices Det provide measurements and detections MD about where a focused object, e.g. the user is, e.g. via position measurements. Such measurements might be a GPS originated coordinate as well as a audio device recognizing the user's voice enabling concluding that the user might be in the near of the location of said audio device. Generally a system of detectors could provide via the detector interface Detln in a synchronous or asynchronous way measurements and detections MD. The locator might subscribe or retrieve such information in order to update the location model Loc. The detector environment might be very heterogeneous, e.g. comprising a mobile network tracking the position of mobiles, a GPS device carried by the user allowing to identify the users GPS coordinates, a local network system comprising sensitive devices and active batches etc. The locator agent unit needs to be aware about the locator devices and the reliability of the provided measurements and detections. The locator agent units might be enabled to choose alternative detectors or even to seek/investigate new locator devices or sources in an intelligent way, accomplishing the awareness about locator devices.

The control devices Contr communicating via the control interface Contln with the locator agent unit Loc. Control devices Contr might be computer terminals with browsers or mobiles. Such devices when authorized or when trusted are enabled to define the locator agent unit's behavior via e.g. preference settings. The exchanged information comprises instructions and preferences PI defining the behavior and the personalization of a locator agent unit Loc.

The client devices Clnt communicating via a the client interface Clntln with the locator agent unit Loc. Client devices Cltn might be a locator device Det, too, as well as services or other locator agent units. A real client device might be mobiles, palm tops, or wearables etc. The client devices Clnt and the locator agent unit exchange requests and replies comprising of location information. A client devices Clnt or its user might be required to authenticate itself to authorize an inquiry in order to keep privacy. The client devices Clnt might even exchange contracts about location information exchange.

To prevent third parties from accessing location information it is preferred to communicate via the networking interfaces Detln, Clntln, and Contln in a secure way using authorization techniques like authentication procedures and encryption procedures for information exchange and transactions like public key encryption, e.g. the well known asymmetric cryptography procedure by Ron Rivest, Adi Shamir, and Leonard Adlemon (RSA), electronic signatures and certificates or Secure Socket Layer (SSL), based also on symmetric cryptography. The application of cryptography procedures inhibit that third parties are able to spy location information or location information (based) transactions, or tasks.

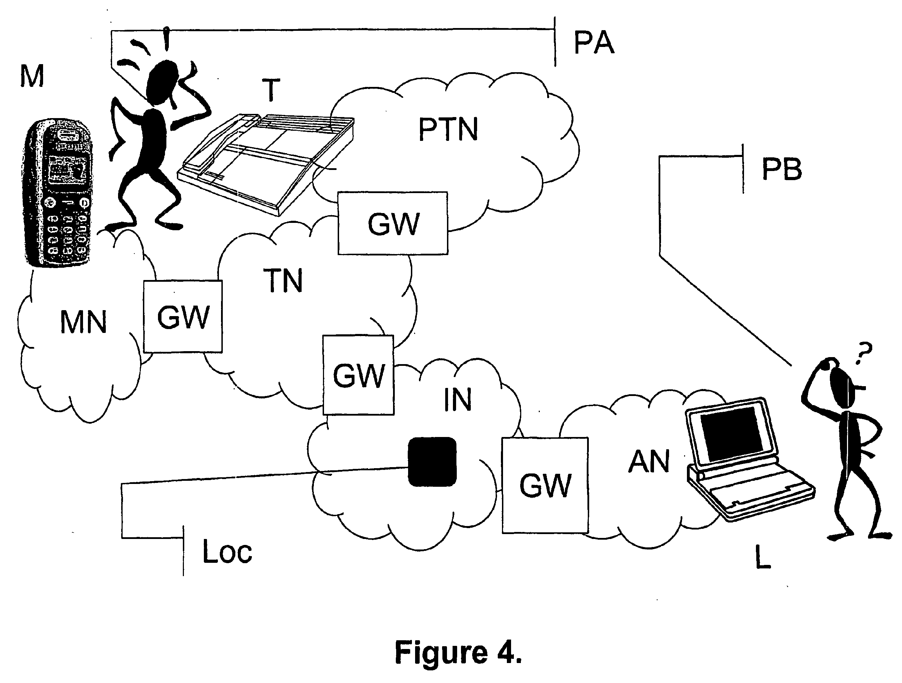

Figure. 4 shows a schematic drawing of a scenario illustrating the functionality of a distributed locator system according to the invention. The scenario shows that a first person PA is seek by a second person PB. The schematic drawing comprises of several networks, an access network AN, an Internet IN, a mobile network MN, a telecommunication network TN, and a plain telecommunication network PTN. The networks are interconnected via gateways GW. The Internet In comprises a locator agent unit Loc personalized for the first person PA. This locator agent unit Loc has subscribed several locator devices, namely in the scenario shown a mobile M and a telephone T. The locator agent unit uses the networking infrastructure to access and gather location information from these locator devices. The mobile M is furthermore a control device for said locator agent unit enabling the first person PA to control the locator agent unit Loc, e.g. by setting preferences.

The second person PB is assumed using a laptop L as client device for inquiring location information of the first person PA. The client device establishes a connection between a for the first person PA personalized location agent unit Loc via the access network AN. The locator agent unit's client interface might be realized as a web service. When a connection is established the second person PB (or the laptop) has to authenticate itself allowing the locator agent unit Loc to conclude about the inquires identity and privileges or granted location information. When the inquirer is authenticated and authorized for processing the inquiry transaction the locator agent unit provides the (aggregated) location information of the first person PA to the laptop L.

A (second) pro-active agent scenario might be that the location agent unit Loc becomes aware of the opportunity of a co-location of the two persons PA and PB by gathering as described above location measurements and detections from said locator devices M and T for the first person PA. The location of the second person might be derived by recognizing directly the laptop activity at a certain access point, e.g. an used network address or by the second person's locator agent unit. The activity in this scenario might be a SMS on the first persons mobile and an e-mail to the second person's laptop reminding both to meet together because of their proximity.

The scenarios illustrate how the locator agent unit interact with the environments, i.e. the networks and the users and how it could provide valuable services.

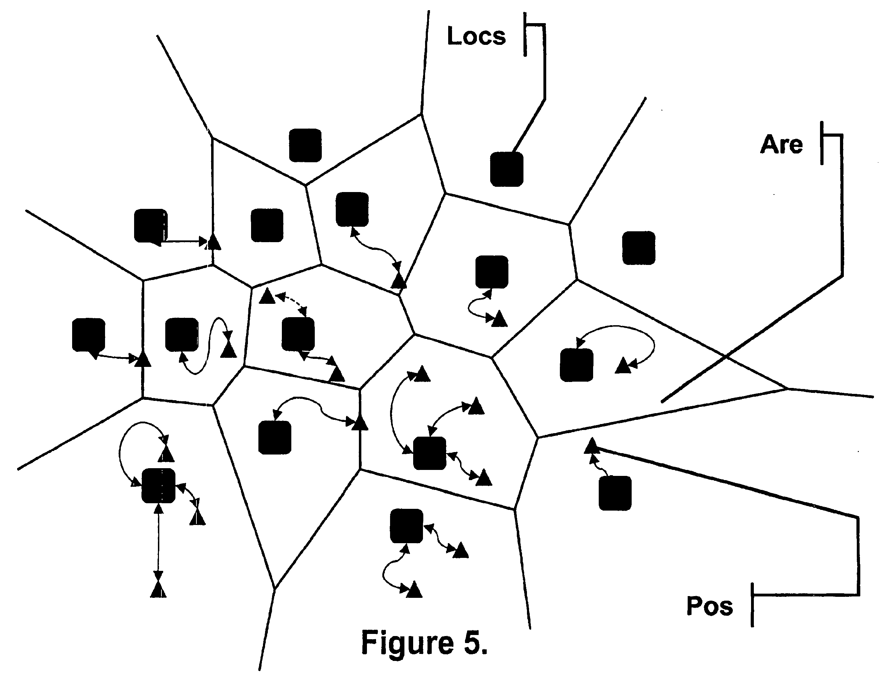

Figure. 5 shows a schematic drawing of distributed locator agent units Locs within a distributed locator system according to the invention. The system comprises locator agent units Locs responsible for certain areas Are. Where an area is a part of the space where objects or persons are located. A locator agent unit might simulate multiple personalized locator agent units.

Influenced from the idea of Vornoi diagrams and cellular networks a spatial load balancing reducing communication effort it is preferred to co-locate the personalized locator agent units having similar location information, i.e. where the persons are close together the personalized locator agent units are together, too. In the figure the located objects, e.g. persons, are indicated by black triangles. Each cell having a locator agent unit comprising personalized locator agent units where the persons are located in the same cell.

The distributed location system provide an efficient platform for handling location information in an efficient, private, and secure way. The system provides a uniform access to location information and mediates via its networking interfaces between the heterogeneous world of the locator devices and locator service consumers, technically represented as clients.

## Claims

1. A method for coordinating location-dependent information, services, or tasks, by a locator agent unit within a distributed system, the method comprising the steps of
- gathering location measurements or proximity observations (MD) of a user (PA),
- aggregating location information (POS) of the user and deriving and refining the location information based on the location measurements or proximity observations,
- a providing the location information (POS) of the user,
- restricting the access to said location information by authenticating and authorizing or trusting inquirer parties (PB) and serving the location information requests according to inquirer's grants,
**characterized by** further comprising the steps of
- co-locating locator agent units having similar location information,
- investigating the distributed system for location information sources (Det) of inquirers and other parties,
- aggregating location information from identified location information sources onto a virtual map (Loc),
where the grants depend on the relative location of the inquirer to the user, the absolute location of the inquirer or the user, the inquirer's identity, time, or on information exchange contract.

2. The method according to claim 1, **characterized in that** by said location information (Pos, A, B, C, R, T) is encrypted.

3. The method according to claim 1, **characterized in that** for said authenticating and authorizing or trusting cryptography techniques ore applied.

4. The method according to claim 1, **characterized in that** the location information further comprises tracking information or planned location information (R).

5. The method according to claim 1, **characterized in that** said location information is a fusion of multiple location measurements (MD) or multiple proximity observations (MD) improving the location precision and reliability.

6. A locator agent unit for coordinating location-dependent information, services, or tasks within a distributed system, the locator agent unit being adapted to
- gather location measurements or proximity observations (MD) of a user (PA),
- aggregate location information (POS) of the user and derive and refine the location information based on the location measurements or proximity observations,
- a provide the location information (POS) of the user,
- restrict the access to said location information by authenticating and authorizing or trusting inquirer parties (PB) and serving the location information requests according to the inquirer's grants,
**characterized in that**
the grants depend on the relative location of the inquirer to the user, the absolute location of the inquirer or the user, the inquirer's identity, time, or an information exchange contract and **in that** the locator agent unit further comprising
- coordination means for co-locating locator agent units having similar location information,
- investigation means for investigating the distributed system for location information sources (Det) of inquirers and other parties,
- a map unit (Proc) for aggregating location information from identified location information sources onto a virtual map (Loc Mod), and
- organization means for providing grants depending on the relative location of the inquirer to the user, the absolute location of the inquirer or the user, the inquirer's identity, time, or on information exchange contract.

7. A Distributed Locator System for providing coordinated location information dependent information, services, or tasks, comprising a network and locator agent units (Locs, Loc) comprising a uniform location information interface (Detln, Clntln, Contln), **characterized by** comprising a personalized locator agent unit according to claim 6 .

8. A Computer Software Product for coordinating location dependent information, services, and tasks comprising computer program means for performing the method according to claim 1 when running on a computer.

## Patentansprüche

1. Verfahren zum Koordinieren von positionsabhängigen Informationen, Diensten oder Aufgaben durch eine Ortungsagent-Einheit in einem verteilten System, welches Verfahren folgende Schritte umfasst:
- Erfassen von Positionsmessungen oder Näherungsbeobachtungen (MD) eines Benutzers (PA);
- Zusammenfassen von Positionsinformationen (POS) des Benutzers und Ableiten und Verfeinern der Positionsinformationen auf der Basis der Positionsmessungen oder Näherungsbeobachtungen;
- Bereitstellen der Positionsinformationen (POS) des Benutzers;
- Beschränken des Zugriffs auf die Positionsinformationen durch Authentifizieren und Autorisieren von Anfragenden (PB) oder **dadurch**, dass Anfragenden Vertrauen gewährt wird, und Erfüllen der Anfragen nach Positionsinformationen entsprechend den Anfragenden gewährten Berechtigungen,
**gekennzeichnet durch** folgende weitere Schritte:
- ortsgleiches Anordnen von Ortungsagent-Einheiten mit annähernd gleichen Positionsinformationen;
- Ermitteln, ob in dem verteilten System Positionsinformationsquellen (Det) von Anfragenden und anderen vorhanden sind;
- Zusammenfassen von Positionsinformationen von ermittelten Positionsinformationsquellen auf einer virtuellen Karte (Loc),
wobei die gewährten Berechtigungen von der relativen Position des Anfragenden zum Benutzer, der absoluten Position des Anfragenden oder Benutzers, der Identität des Anfragenden, der Zeit oder von einem Informationsaustauschvertrag abhängig sind.

2. Verfahren nach Anspruch 1, **dadurch gekennzeichnet, dass** die Positionsinformationen (Pos, A, B, C, R, T) verschlüsselt sind.

3. verfahren nach Anspruch 1, **dadurch gekennzeichnet, dass** für die Authentifizierung und Autorisierung oder Vertrauensgewährung Kryptografieverfahren angewendet werden.

4. Verfahren nach Anspruch 1, **dadurch gekennzeichnet, dass** die Positionsinformationen außerdem Verfolgungsinformationen oder geplante Positionsinformationen (R) umfassen.

5. verfahren nach Anspruch 1, **dadurch gekennzeichnet, dass** die Positionsinformationen eine verschmelzung von mehrfachen Positionsmessungen (MD) oder mehrfachen Näherungsbeobachtungen (MD) sind, welche die Ortungsgenauigkeit und -zuverlässigkeit verbessert.

6. Ortungsagent-Einheit zum Koordinieren von positionsabhängigen Informationen, Diensten oder Aufgaben in einem verteilten System, wobei die Ortungsagent-Einheit geeignet ist,
- Positionsinformationen oder Näherungsbeobachtungen (MD) eines Benutzers (PA) zu erfassen,
- Positionsinformationen (POS) des Benutzers zusammenzufassen und die Positionsinformationen auf der Basis der Positionsmessungen oder Näherungsbeobachtungen abzuleiten und zu verfeinern,
- die Positionsinformationen (POS) des Benutzers bereitzustellen und
- den Zugriff auf die Positionsinformationen **dadurch** zu beschränken, dass sie Anfragende (PB) authentifiziert und autorisiert oder diesen Vertrauen gewährt und dass sie die Anfragen nach Positionsinformationen entsprechend den Anfragenden gewährten Berechtigungen erfüllt,
**dadurch gekennzeichnet, dass**
die gewährten Berechtigungen von der relativen Position des Anfragenden zum Benutzer, der absoluten Position des Anfragenden oder Benutzers, der Identität des Anfragenden, der Zeit oder von einem Informationsaustauschvertrag abhängig sind, und **dadurch**, dass die Ortungsagent-Einheit weiterhin umfasst:
- Koordinationsmittel zum ortsgleichen Anordnen von Ortungsagent-Einheiten mit annähernd gleichen Positionsinformationen;
- Ermittlungsmittel zum Ermitteln, ob in dem verteilten System Positionsinformationsquellen (Det) von Anfragenden und anderen vorhanden sind;
- eine Karteneinheit (Proc) zum zusammenfassen von Positionsinformationen von ermittelten Positionsinformationsquellen auf einer virtuellen Karte (LocMod), und
- Organisationsmittel zum Gewähren von Berechtigungen in Abhängigkeit von der relativen Position des Anfragenden zum Benutzer, der absoluten Position des Anfragenden oder Benutzers, der Identität des Anfragenden, der Zeit oder von einem Informationsaustauschvertrag.

7. Verteiltes Ortungssystem zum Bereitstellen von koordinierten positionsabhängigen Informationen, Diensten oder Aufgaben, welches ein Netz und Ortungsagent-Einheiten (Locs, Loc) mit einer einheitlichen Positionsinformationsschnittstelle (DetIn, ClntIn, Contln) umfasst, **dadurch gekennzeichnet, dass** sie eine personalisierte Ortungsagent-Einheit gemäß Anspruch 6 umfasst.

8. Computersoftware-Produkt zum Koordinieren von positiansabhängigen Informationen, Diensten und Aufgaben, welches Computerprogramm-Mittel zur Durchführung des Verfahrens gemäß Anspruch 1 bei Ablauf auf einem Computer umfasst.

## Revendications

1. Procédé de coordination d'informations, de services ou de tâches dépendants de la localisation, par une unité d'agent localisateur dans un système distribué, le procédé comprenant les étapes consistant à :
collecter des mesures de localisation ou d'observations de proximité (MD) d'un utilisateur (PA),
cumuler des informations de localisation (POS) de l'utilisateur et dériver et affiner les informations de localisation en fonction des mesures de localisation ou des observations de proximité,
fournir les informations de localisation (POS) de l'utilisateur,
restreindre l'accès aux dites informations de localisation en authentifiant et en autorisant ou en faisant confiance à des parties demandeuses (PB) et en servant les demandes d'informations de localisation selon les droits du demandeur,
**caractérisé en ce qu'**il comprend en outre les étapes consistant à :
co-localiser des unités d'agent localisateur comprenant des informations de localisation similaires,
rechercher le système distribué pour des sources d'informations de localisation (Det) de demandeurs et autres parties,
cumuler des informations de localisation en provenance de sources d'informations de localisation sur une carte virtuelle (Loc),
où les droits dépendent de la localisation relative du demandeur par rapport à l'utilisateur, la localisation absolue du demandeur ou de l'utilisateur, l'identité du demandeur, le temps ou un contrat d'échange d'informations.

2. Procédé selon la revendication 1, **caractérisé en ce que** lesdites informations de localisation (Pos, A, B, C, R, T) sont chiffrées.

3. Procédé selon la revendication 1, **caractérisé en ce que** pour ladite authentification et autorisation ou confiance, des techniques de cryptographie sont appliquées.

4. Procédé selon la revendication 1, **caractérisé en ce que** les informations de localisation comprennent en outre des informations de suivi ou des informations de localisation prévues (R).

5. Procédé selon la revendication 1, **caractérisé en ce que** lesdites informations de localisation est une fusion de mesures de localisation multiples (MD) ou d'observations de proximité multiples (MD) améliorant la précision et la fiabilité de localisation.

6. Unité d'agent localisateur destinée à coordonner des informations, des services ou des tâches dépendants de la localisation dans un système distribué, l'unité d'agent localisateur étant adaptée pour
collecter des mesures de localisation ou des observations de proximité (MD) d'un utilisateur (PA),
cumuler des informations de localisation (POS) de l'utilisateur et dériver et affiner les informations de localisation en fonction des mesures de localisation ou des observations de proximité,
fournir les informations de localisation (POS) de l'utilisateur,
restreindre l'accès aux dites informations de localisation en authentifiant et en autorisant ou en faisant confiance à des parties demandeuses (PB) et en servant les requêtes d'informations de localisation selon les droits du demandeur,
**caractérisé en ce que**
les droits dépendent de la localisation relative du demandeur par rapport à l'utilisateur, la localisation absolue du demandeur ou de l'utilisateur, l'identité du demandeur, le temps, ou un contrat d'échange d'informations et **en ce que** l'unité d'agent localisateur comprend en outre
des moyens de coordination destinés à co-localiser des unités d'agent localisateur comprenant des informations de localisation similaires,
des moyens d'investigation destinés à rechercher dans le système distribué des sources d'informations de localisation (Det) de demandeurs et autres parties,
une unité de carte (Proc) destinée à cumuler les informations de localisation provenant de sources d'informations de localisation sur une carte virtuelle (LocMod), et
des moyens d'organisation destinés à fournir des droits selon la localisation relative du demandeur par rapport à l'utilisateur, la localisation absolue du demandeur ou de l'utilisateur, l'identité du demandeur, le temps ou un contrat d'échange d'informations.

7. Système de localisation distribué destiné à fournir des informations, des services ou des tâches dépendants d'informations de localisation coordonnées, comprenant un réseau et des unités d'agent localisateur (Locs, Loc) comprenant une interface d'informations de localisation uniforme (DetIn, ClntIn, ContIn), **caractérisé en ce qu'**il comprend une unité d'agent localisateur personnalisée selon la revendication 6.

8. Produit logiciel informatique destiné à coordonner des informations, des services et des tâches dépendants de la localisation comprenant des moyens formant programme informatique destinés à réaliser le procédé selon la revendication 1 lorsqu'ils sont exécutés sur un ordinateur.
